Europäisches Patentamt

European Patent Office

Office européen des brevets

(19)

(11) Veröffentlichungsnummer: **0 003 302**
B1

(12) # EUROPÄISCHE PATENTSCHRIFT

(45) Veröffentlichungstag der Patentschrift: 08.07.81

(21) Anmeldenummer: 79100103.5

(22) Anmeldetag: 15.01.79

(51) Int. Cl.³: **A 01 N 25/26, B 01 J 2/12**

(54) Verfahren zur Herstellung staubfreier Pflanzenschutzmittel-Granulate.

(30) Priorität: 01.02.78 DE 2804259

(43) Veröffentlichungstag der Anmeldung:
08.08.79 Patentblatt 79/16

(45) Bekanntmachung des Hinweises auf die Patenterteilung:
08.07.81 Patentblatt 81/27

(84) Benannte Vertragsstaaten:
BE CH DE FR GB IT NL

(56) Entgegenhaltungen:
FR - A - 2 100 849
FR - A - 2 289 252
GB - A - 1 299 378
GB - A - 1 304 543
GB - A - 1 305 320

(73) Patentinhaber: BAYER AG
Zentralbereich Patente, Marken und Lizenzen
D-5090 Leverkusen 1, Bayerwerk (DE)

(72) Erfinder: Telle, Otto
Haferkamp 10
D-5000 Köln 80 (DE)
Erfinder: Pohlmann, Heinrich, Dr.
Pommernallee 5
D-4047 Dormagen (DE)
Erfinder: Schall, Roland
Karl-von-Ossietzky-Strasse 2
D-5090 Leverkusen (DE)
Erfinder: Advena, Hans-Jürgen, Dr.
In der Hildscheid 14
D-5068 Odenthal (DE)

Courier Press, Leamington Spa, England.

# 0 003 302

## Verfahren zur Herstellung staubfreier Pflanzenschutzmittel-Granulate

Die vorliegende Erfindung betrifft ein neues Verfahren zur Herstellung staubfreier Pflanzenschutzmittel-Granulate sowie die Durchführung dieses Verfahrens mit Hilfe einer dafür geeigneten Vorrichtung.

Die Herstellung und die Anwendung von granulierten Pflanzenschutzmitteln ist seit langem bekannt (vgl. Martin, The Scientific Principles of Crop Protection (1959), 5. Auflage und van Valkenburg, Pesticide Formulation (1973)). Unter den verschiedenen technischen Möglichkeiten zur Herstellung von Pflanzenschutzmittel-Granulaten nehmen Verfahren, bei denen vorgefertigte, aus natürlichen anorganischen oder organischen oder synthetischen Trägerstoffen bestehende Granulate, oder Kernmaterialien, mit Wirkstoff enthaltenden schichten umhüllt werden, eine besondere Stellung ein (vgl. van Valkenburg, Pesticide Formulation (1973); US—PS 3 849 105; CA—PS 714 528; GB—PS 815 829 und DT—PS 1 199 049). Durch die Umhüllung eines Trägergranulates wird nämlich eine kontrollierbare Verfügbarkeit der in der Hülle befindlichen Wirkstoffsubstanz erzielt, die nur wenig von den Eigenschaften des Kernmaterials beeinflußt wird.

Bei diesen vorbeschriebenen Verfahren können die Hüllschichten auf sehr unterschiedliche Weise auf die vorgefertigten Trägermaterialien aufgetragen werden. So ist es z.B. bekannt, die Hüllschicht durch die haftende Verbindung eines Pulvers (feinteiliger Feststoff) mit einem wenig flüchtigen Öl zu erzeugen, wobei sowohl das Pulver (der feinteilige Feststoff) als auch das Öl das biologisch wirksame Prinzip sein können, Pflanzenschutzmittel-Granulate, die nach diesem vorbekannten Verfahren produziert werden, sind zwar mit einem relativ geringen Aufwand an Verfahrensgeräten und Kosten herstellbar, haben aber für die Anwendung nicht immer befriedigende Eigenschaften. So bildet sich wegen der unregelmäßigen Oberfläche derartiger Granulate bei deren Handhabung und Transport jeweils durch Abrieb eine mehr oder weniger große Menge an Staub. Für den Anwender des Pflanzenschutzmittel-Granulates bedeutet der Staub ein Gesundheitsrisiko. Darüber hinaus treten beim Ausbringen solcher staubhaltiger Granulate unerwünschte Drifterscheinungen auf. Dadurch geht nicht nur ein Teil des Wirkstoffes für das vorgesehene Anwendungsgebiet verloren, sondern es können auch, — vor allem beim Ausbringen von Herbizid-Granulaten —, Schäden in Kulturen entstehen, die dem Anwendungsgebiet benachbart sind.

Weiterhin ist es bekannt, Pflanzenschutzmittel-Granulate mit einer gegen Abrieb festeren Hüllschicht dadurch zu erzeugen, daß man statt des Pulver-Öl-Systems Wirkstoff enthaltende wäßrige oder organische Lösungen oder Emulsionen (Latices) von natürlichen oder synthetischen Polymeren auf die vorgefertigten Trägermaterialien aufbringt (vgl. CA—PS 714 528 und CH—PS 473 742). Nachteilig an der Herstellung solcher Granulate ist jedoch, daß ein relativ hoher maschineller Aufwand kaum vermeidbar ist. So erfordert das Verfahren einen Zwei-Stufen-Prozeß, der in nacheinander benutzten Geräten (Maschinen) durchgeführt wird. Die erste Stufe ist die Herstellung der Hüllenschicht, die bevorzugt in Mischeinrichtungen erfolgt; die zweite Stufe ist ein Trocknungs- oder Reaktionsprozeß, der in Trommeltrocknern, Röhrentrocknern, Vakuumtrocknern, Fließbett-Trocknern und anderen Trockengeräten durchgeführt wird (vgl. van Valkenburg, Pesticide Formulation (1973); Sherrington, The Chemical Engineer 46, Nr. 220 (1968), 201—215 und Sherrington, The Canadian Journal of Chemical engineering Vol. 47, (1969) 308/316). Nachteilig an den auf diese Weise hergestellten Pflanzenschutzmittel-Granulaten ist ferner, daß die abriebbedingte Staubbildung auch hier nicht in befriedigendem Maße unterbunden werden kann.

Es wurde nun gefunden, daß sich staubfreie Pflanzenschutzmittel-Granulate herstellen lassen, wenn man

a) in einem offenen, in seiner Drehrichtung gegebenenfalls umsteuerbaren Mischer Trägermaterial (Kernmaterial) vorlegt,

b) dann unter Mischen mit Bindemittel und Hüllmaterial, welches bis 100% Pflanzenschutzmittel enthalten kann, sowie gegebenenfalls mit Zusatzstoffen versetzt und

c) anschließend unter Gaszufuhr in dem offenen, in seiner Drehrichtung gegebenenfalls umsteuerbaren Mischer trocknet.

Weiterhin wurde gefunden, daß sich das erfindungsgemäße Verfahren mit Hilfe einer Vorrichtung durchführen läßt, die aus einem ein- oder beidseitig offenen, in seiner Drehrichtung gegebenenfalls umsteuerbaren Mischer mit Zufuhreinrichtungen für Granulatträger, feinteilige Feststoffe, Bindemittel und Gas besteht.

Es ist als äußerst überraschend zu bezeichnen, daß sich nach dem erfindungsgemäßen Verfahren in einem offenen, in seiner Drehrichtung gegebenenfalls umsteuerbaren Mischer staubfreie Pflanzenschutzmittel-Granulate herstellen lassen, denn aufgrund des bekannten Standes der Technik war anzunehmen, daß beim Arbeiten nach einem derartigen Ein-Topf-Verfahren eine Agglomeration, also ein Verklumpen des Granulathaufwerkes auftreten würde. Im Gegensatz zu den Erwartungen ist dies jedoch nicht der Fall. Überraschend ist ferner, daß bei dem erfindungsgemäßen Verfahren eine störungsfreie Trocknung des Granulates in dem offenen Mischer möglich ist, obwohl das Granulat-

2

0 003 302

haufwerk in krassem Unterschied zu konventionellen Trocknern nicht in dünner, sondern in hoher Schichtdicke vorliegt.

Das erfindungsgemäße Verfahren weist eine Reihe von Vorteilen auf. So ist nur ein relativ geringer apparativer Aufwand erforderlich, da Granulatherstellung und Trocknung in demselben Gerät durchgeführt werden. Weiterhin wird weniger Energie benötigt als bei entsprechenden herkömmlichen Verfahren, weil ein Teil der zur Trocknung des Granulates erforderlichen Energie durch Reibungswärme im Granulathaufwerk aufgebracht wird. Ein anderer wesentlicher Vorteil des erfindungsgemäßen Verfahrens besteht darin, daß die erhaltenen Granulate eine glatte Oberfläche und damit auch eine hohe Abriebfestigkeit besitzen. Dies bedeutet, daß einerseits bei der Herstellung des Granulates kaum Staub gebildet wird, durch welchen das Bedienungspersonal gefährdet werden könnte. Andererseits treten auch beim Ausbringen der Granulate keine unerwünschten Drifterscheinungen auf. Schließlich eignet sich das erfindingsgemäße Verfahren auch zur Herstellung von Granulaten, die temperaturempfindliche Pflanzenschutzmittel-Wirkstoffe enthalten, den die zur Trocknung der Produkte erforderlichen Temperaturen liegen verhältnismäßig niedrig. Das erfindungsgemäße Verfahren stellt somit eine wertvolle Bereicherung der Technik dar.

Als Trägermaterialien (Kernmaterialien) können bei der Durchführung des erfindungsgemäßen Verfahrens alle üblichen zur Herstellung von Granulaten in Frage kommenden feinkörnigen Feststoffe verwendet werden. Hierzu gehören vorzugsweise gebrochene und fraktionierte natürliche Gesteine, wie Calcit, Marmor, Quarzsand, Bims, Sepiolith, Dolomit, weiterhin synthetische Stoffe aus anorganischen und organischen Mehlen sowie ferner Mehle aus organischem Material, wie Sägemehl, Kokosnußschalen, Maiskolben und Tabakstengel.

Als Bindemittel können bei der Durchführung des erfindungsgemäßen Verfahrens alle zur Herstellung von Granulaten üblichen Bindemittel (Kleber) eingesetzt werden. Hierzu gehören vorzugsweise Lösungen, Emulsionen oder Latices von natürlichen oder synthetischen organischen Stoffen, wie Methylcellulose. Dextrin, Stärke, Polyvinylpyrrolidon, Ligninsulfonat, Gummiarabicum, Polyvinylalkohol und Polyvinylacetat, in Wasser oder niedrig siedenden organischen Solventien, wie Methanol, Äthanol, Butanol und Methylenchlorid.

Als Hüllmaterialien kommen bei der Durchführung des erfindungsgemäßen Verfahrens alle zur Granulat-Herstellung üblichen Stoffe in Betracht. So kann das Hüllenmaterial vorzugsweise aus einem oder mehreren Pflanzenschutzmittel-Wirkstoffen bestehen. Vorzugsweise verwendbar als Hüllenmaterial sind auch Mischungen aus einem oder mehreren Pflanzenschutzmittel-Wirkstoffen und Fullmaterialien, Emulgatoren, Dispergiermitteln, Haftmitteln und/oder Farbstoffen. Hierbei kommen als Füllmaterialien anorganische oder organische feste Trägerstoffe, wie natürliche Gesteinsmehle, z.B. Kaoline, Tonerden, Talkum, Kreide, Quarz, Attapulgit, Montmorillonit oder Diatomeenerde, ferner synthetische Gesteinsmehle, wie hochdisperse Kieselsäure, Aluminiumoxid und Silikate und außerdem Mehle natürlicher organischer Stoffe, wie Holzmehl, Korkmehl und Tabakstaub. Als Emulgatoren kommen in Frage nichtionogene und anionische Emulgatoren, wie Polyoxäthylen-Fettsäure-Ester, Polyoxäthylen-Fettalkohol-Äther, z.B. Alkylaryl/-polyglykol-äther; Alkylsulfonate, Alkylsulfate sowie Eiweißhydrolysate. Als Dispergiermittel lassen sich verwenden Ligninsulfonate und Methylcellulose. Als Haftmittel kommen diejenigen Bindemittel in Frage, die bereits im Zusammenhang mit der Beschreibung der Kernamaterialien der Granulate genannt wurden. Als Farbstoffe können vorzugsweise anorganische Pigmente, wie Eisenoxid, Titandioxid und Ferrocyanblau, oder organische Farbstoffe, wie Alizarin-, Azo- und Metallphthalocyaninfarbstoffe verwendet werden.

Als Pflanzenschutzmittel-Wirkstoffe können bei der Durchführung des erfindungsgemäßen Verfahrens alle auf vorgefertigte Trägermaterialien aufziehbaren Wirkstoffe, wie Insektizide, Nematizide, Fungizide, Herbizide usw. eingesetzt werden. Beispielhaft genannt seien:

3-(3,4-Dichlorphenyl)-1,1-dimethylharnstoff
3-sec.-Butyl-5-brom-6-methyluracil
3-Amino-1,2,4-triazol
Hexahydro-1-H-azepin-1-carbamidsäure-thiolester
O,O-Diäthyl-S-(2-äthylmercaptoäthyl)-dithio-phosphorsäureester
2,2-Dimethyl-2,3-dihydrobenzofuranyl-1-methylcarbamat
2-Isopropoxyphenyl-N-methylcarbamat
2-(Äthylthiomethyl-phenyl)-N-methylcarbamat
O-Äthyl-O-(3-methyl-4-methylthio-phenyl)-isopropylamidophosphat
2,4-Dichlorphenoxy-propionsäure-Salze

Als Zusatzstoffe, die bei der Durchführung des erfindungsgemäßen Verfahrens verwendet werden können, kommen alle für Granulat-Herstellung üblichen Zusatzstoffe in Frage. Hierzu gehören beispielsweise Coating-Lösungen, also Lösungen, die geeignet sind, auf den Granulat-Teilchen eine zusätzliche Schicht zu erzeugen. Derartige Coating-Losungen sind z.B. wäßrige Polyvinylacetat-Lösungen oder wäßrige Harnstoff-Formaldehyd-Lösungen, welche zur Beschleunigung der Kondensation auch Zitronensäure oder andere Katalysatoren enthalten können.

In der letzten Phase des erfindungsgemäßen Verfahrens erfolgt die Trocknung des Granulates

3

**0 003 302**

durch Verwendung von Gasen erhöhter Temperatur und niedrigem Sättigungsgrad an Wasserdampf bzw. Lösungsmittel. Durch den Gasstrom wird die Temperatur des Granulathaufwerkes und die relative Sättigung des Luftraumes im Mischer mit Wasserdampf und/oder Lösungsmitteldampf so gesteuert, daß eine Kondensation und damit eine Agglomeratbildung verhindert wird. Demgemäß muß die minimale Gasmenge und deren Temperatur so bemessen sein, daß keine Dampfkondensation möglich ist. Bei dieser Art der Trocknung wird ein wesentlicher Anteil der für die Trocknung benötigten Energie durch die während des Mischens im Granulathaufwerk entsthende Reibungswärme aufgebracht.

Die Trocknungsdauer kann innerhalb eines größeren Bereiches variiert werden. Sie liegt im allgemeinen zwischen 5 Minuten und 2 Stunden, vorzugsweise zwischen 10 Minuten und 1 Stunde.

Verwendet man einen einseitig offenen Mischer, so wird der regulierbare Gasstrom zum Trocknen des Granulates durch die Beschickungsöffnung des Mischers eingeleitet. Im Falle der Verwendung eines beidseitig offenen Mischers wird der regulierbare Gasstrom durch den Mischer durchgeleitet oder durchgesaugt.

Als Gase können zur Trocknung insbesondere Luft, Stickstoff oder Verbrennungsgase verwendet werden. Die Temperatur des Gasstromes kann je nach Granulat innerhalb eines größeren Bereiches variiert werden. Im allgemeinen liegt die Eintrittstemperatur des Gasstromes unter 100°C, vorzugsweise zwischen 50 und 80°C.

Die vorrichtung zur Durchführung des erfindungsgemäßen Verfahrens besteht aus einem ein- oder beidseitig offenen, in seiner Drehrichtung gegebenenfalls umsteuerbaren Mischer mit Zufuhreinrichtungen für Trägergranulat, feinteilige, als Hüllmaterial dienende Feststoffe, Bindemittel und Gas.

Als Mischer können hierbei alle einseitig oder beidseitig offenen Mischer verwendet werden, deren Drehrichtung gegebenenfalls während des Betriebes geändert werden kann. Mischer dieser Art sind aus der Bauindustrie oder der chemischen Apparatetechnik bekannt. Besonders vorteilhaft ist die Verwendung eines beidseitig offenen Mischers, dessen Mischkessel unsymmetrisch gebaut ist. Bei einem solchen Mischer hat die Beschickungsseite steile Wände, während die Austragsseite konisch ausgeführt ist. Die Hilfseinbauten zur Bewegung und Durchmischung des Granulathaufwerkes sind so angeordnet, daß sie in einer Drehrichtung nur wenig achsialen Förderwirkungsgrad in Richtung der Beschickungsöffnung haben, während sie nach dem Umsteuern der Drehrichtung das Granulat rasch durch die Austragsöffnung fördern.

Als Zufuhreinrichtungen für Trägergranulat (Kernmaterial) kommen übliche Hub- und Kippvorrichtungen in Frage, wie sie für Baumaschinen und Anlagen der chemischen Industrie bekannt sind.

Als Zufuhreinrichtungen für Bindemittel, — also wäßrige oder organische Losungen oder Emulsionen —, kommen einfache Düsen in Frage. Letztere sind vorzugsweise nur wenig oberhalb der Granulatschüttung im Mischer angebracht.

Als Zufuhreinrichtungen für feinteilige, als Hüllmaterial diendende Feststoffe kommen übliche Förderschnecken in Betracht. Dabei sind die Förderschnecken so in den Mischer eingebaut, daß deren Öffnung ebenfalls nur wenig oberhalb der Granulatschüttung angebracht ist.

Als Zufuhreinrichtungen für Gas können übliche, zur Gaseinleitung geeignete Apparate benutzt werden. Letztere werden so angeordnet, daß ein Gasstrom der jeweils gewünschten Temperatur, Menge und Geschwindigkeit durch die Beschickungsöffnung des Mischers eingeleitet werden kann.

Auf der Seite des Mischers, an der das Produkt ausgetragen wird, kann dem Mischer zweckmäßigerweise eine Absaughaube nachgeschaltet sein, an deren Unterseite ein Auffangbehälter mit einer Abfülleinrichtung angebracht sein kann. Weiterhin ist es zweckmäßig, den aus dem Mischer austretenden Gasstrom (Abgas) durch einen nachgeschalteten Filter zu reinigen.

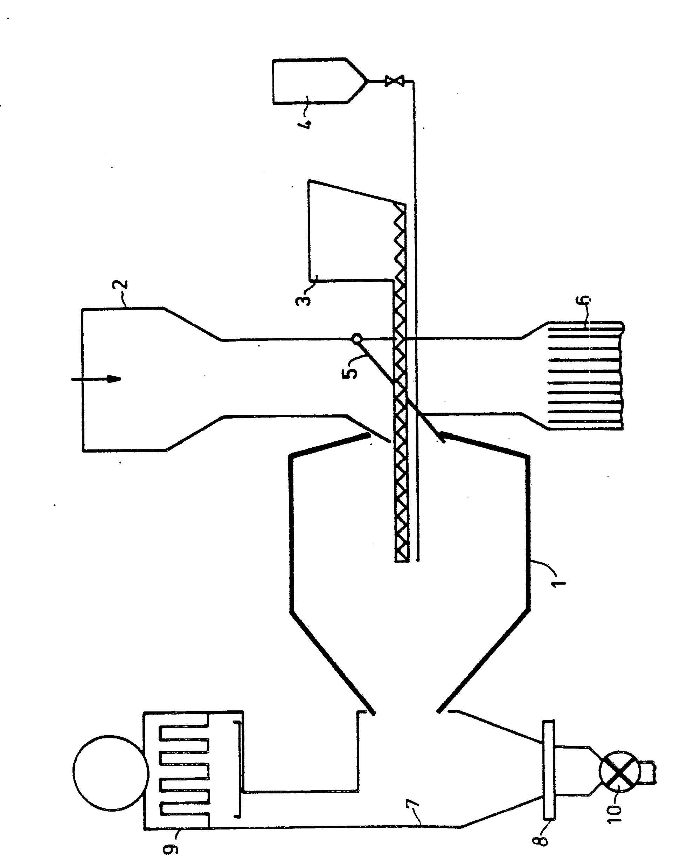

Aufbau und Anordnung einer Vorrichtung, die zur Durchführung des erfindungsgemäßen Verfahrens besonders geeignet ist, sind in der Abbildung 1 schematisch dargestellt. In dieser Abbildung haben die angegebenen Zahlen die folgenden Bedeutungen:

1 = Mischer mit umsteuerbarer Drehrichtung

2 = Zufuhr für Trägergranulat (Kernmaterial)

3 = Behälter mit Transportschnecke für Hüllmaterial

4 = Behälter mit Zuleitung für Bindemittel

5 = Klappe zum Zuschalten eines Lufterhitzers

6 = Lufterhitzer

7 = Auffangbehälter für Fertigprodukt

8 = Siebeinrichtung zur Abtrennung von Agglomeraten

9 = Luftfilter mit Ventilator

10 = Zellenschleuse zur Abfülleinrichtung

4

Zur weiteren Erklärung des erfindungsgemäßen Verfahrens sie dessen Durchführung in einer Apparatur der in Abbildung 1 dargestellten Art beispielhaft beschrieben. Die angegebenen Zahlen beziehen sich hierbei jeweils auf Abbildung 1. — Der beidseitig offene Mischer (1) wird zunächst über eine Kippvorrichtung (2) mit Trägergranulat (Kernmaterial) beschickt. Unter Mischen werden anschließend nacheinander oder gegebenenfalls auch gleichzeitig das Bindemittel (wäßrige oder organische Lösungen und Emulsionen) über die Zuleitung (4) eingedüst und der als Hüllmaterial dienende feinteilige Feststoff über eine Transportschnecke (3) zugeführt. Die Zugabe von Bindemittel und Hüllmaterial erfolgt schnell. Danach wird bis zur Beendigung der Granulatbildung gemischt. Die Mischdauer ist hierbei jewiels abhängig von der Art und der Menge des Granulates. Im Anschluß daran erfolgt die Trocknung durch Einleiten eines gegebenenfalls durch einen Lufterhitzer (6) vorgewärmten Gasstromes uber die Klappe (5). Die Minimalgasmenge, die durch den Mischer gefördert wird, muß hierbei so groß sein, daß keine Dampfkondensation möglich ist. Das fertige Granulat wird dann durch Umschalten der Drehrichtung des Mischers in den Auffangbehälter (7) transportiert und über eine Siebeinrichtung (8) zur Abtrennung von eventuell enthaltenen Agglomeraten der Abfülleinrichtung (10) zugeführt. Die Abgase werden mit Hilfe eines Ventilators über einen Luftfilter (9) gesaugt.

In einer besonderen Ausführung des erfindungsgemäßen Verfahrens arbeitet man so, daß man das fertige Granulat vor der Trocknung noch mit einer Coating-Lösung versetzt. Die Granulatteilchen werden dadurch mit einer zusätzlichen Hüllschicht versehen, wodurch sich die ohnehin hohe Abriebfestigkeit der erfindungsgemäß herstellbaren Granulate noch weiter erhöht.

Die erfindungsgemäß herstellbaren Granulate sind staubfrei und können nach den im Pflanzenschutz üblichen Methoden eingesetzt werden.

Die Herstellung von staubfreien Pflanzenschutzmittel-Granulaten nach dem erfindungsgemäßen Verfahren wird durch die nachfolgenden Beispiele veranschaulicht.

### Beispiel 1

Herstellung eines Granulates nach einer aus dem Stand der Technik bekannten Methode:

In einem Nauta-Mischer werden 460,0 kg Quarzsand der Körnung 0,4—0,8 mm vorgelegt und unter Mischen mit 5,0 kg Weißöl versetzt. Der Trägerstoff ist nach etwa 5 Minuten gleichmäßig benetzt. Danach werden 35,0 kg einer Wirkstoff-Mischung, bestehend aus 40,0 Gew.-% 3-(3,4-Dichlorphenyl)-1,1-dimethylharnstoff, 20,0 Gew.-% 3-sec.-Butyl-5-brom-6-methyluracil, 28,5 Gew.-% 3-Amino-1,2,4-triazol und 11,5 Gew.-% Kieselsäure, zugegeben. Nach ungefähr 15—20 Minuten hat sich eine gleichmäßige Hüllschicht auf dem Trägermaterial gebildet. Falls das entstandene Granulat noch klebt, wird durch portionsweisen Zusatz von fein zerkleinertem Füllstoff (z.B. Kaolin) ein freifließendes Produkt erzeugt.

### Beispiel 2

Herstellung eines Granulates nach einer aus dem Stand der Technik bekannten Methode:

In einem Munson-Mischer werden 461,3 kg Quarzsand der Kornung 0,4—0,8 mm vorgelegt und anschließend nacheinander mit 7,5 kg einer Klebelösung (= 50%ige wäßrige Polyvinylacetat-Emulsion) und 35,0 kg einer Wirkstoffmischung versetzt, welche aus 40,0 Gew.-% 3-(3,4-Dichlorphenyl)-1,1-dimethylharnstoff, 20,0 Gew.-% 3-sec.-Butyl-5-brom-6-methyluracil, 28,5 Gew.-% 3-Amino-1,2,4-triazol und 11,5 Gew.-% Kieselsäure besteht. Nach etwa 5 Minuten hat sich auf dem Trägermaterial eine gleichmäßige Hüllschicht gebildet. Das feuchte Granulat wird in einen Gegenstrom-Drehrohrtrockner überführt.

| | |
|---|---|
| Lufteintrittstemperatur: | 60—80°C |
| Trocknungsdauer: | 10—15 Minuten |
| Restwassergehalt des Produktes: | ≤0,3% |
| Produkttemperatur: | ca. 40—50°C |

Vor der Abfüllung wird das Granulat zur Abkühlung zwischengelagert.

### Beispiel 3

Herstellung eines Granulates nach dem erfindungsgemäßen Verfahren:

In einem offenen Mischer der in Abb. 1 dargestellten Art werden 461,3 kg Quarzsand der Körnung 0,4—0,8 mm vorgelegt und anschließend nacheinander mit 7,5 kg einer Klebelosung (= 50%ige wäßrige Polyvinylacetat-Emulsion), — Mischzeit 1 Minute —, und 35,0 kg einer Wirkstoffmischung versetzt, welche aus 40,0 Gew.-% 3-(3,4-Dichlorphenyl)-1,1-dimethylharnstoff, 20,0 Gew.-% 3-sec.-Butyl-5-brom-6-methyluracil, 28,5 Gew.-% 3-Amino-1,2,4-triazol und 11,5 Gew.-% Kieselsäure besteht. Nach etwa 5 Minuten hat sich auf dem Trägermaterial eine gleichmäßige Hüllschicht ausgebildet. Anschließend wird sofort Warmluft durch den Mischer gesaugt.

| Lufteintrittstemperatur: | 50—70°C |
|---|---|
| Luftaustrittstemperatur: | 30—35°C |
| Trocknungsdauer: | 15—20 Minuten |
| Restwassergehalt des Produktes: | ⩽0,3% |

Das Produkt hat eine Temperatur von etwa 25°C und kann ohne nachgeschaltete Abkühlphase abgefüllt werden.

*Bestimmung der Abriebfestigkeit der nach Beispiel 1 bis 3 hergestellten Granulate:*

Als Testapparatur dient eine Becherglas mit einem Innendurchmesser von 90 mm. In dieses Becherglas werden jeweils 100 g des zu prüfenden Granulates eingefüllt. In einer Höhe von 5 mm über dem Boden des Becherglases dreht sich der waagerechte Balken (∅ 12 mm, Länge 65 mm) eines T-förmigen Rührers mit etwa 600 U/Min. Nach 30 Minuten wird über ein 200 µm Testsieb abgesiebt. Der Feinanteil, der das Sieb passiert, wird als % Abrieb angegeben.

| | Beispiel 1 | Beispiel 2 | Beispiel 3 |
|---|---|---|---|
| % Abrieb | 3,5% | 1,5% | 0,5% |

Wie aus den ermittelten Prozentzahlen hervorgeht, besitzt das nach dem erfindungsgemäßen Verfahren erhaltene Granulat (Beispiel 3) eine wesentlich höhere Abriebfestigkeit als diejenigen Granulate, die nach vorbekannten Methoden hergestellt wurden (Beispiele 1 und 2).

Beispiel 4

Herstellung eines Granulates nach dem erfindungsgemäßen Verfahren:

In einem offenen Mischer der in Abb. 1 dargestellten Art werden 467,5 g Calcit der Körnung 0,5—1,0 mm vorgelegt. Dazu werden unter Mischen 15,0 kg Klebelösung (20%ige wäßrige Polyvinylalkohol-Lösung) eingedüst. Nach 2 Minuten werden 26,0 kg einer 2,2-Dimethyl-2,3-dihydrobenzo-furanyl-7-methylcarbamat-Vormischung, — bestehend aus 75 Gew.-% 2,2-Dimethyl-2,3-dihydro-benzofuranyl-7-methylcarbamat, 1,0 Gew.-% Netzmittel, 5,0 Gew.-% Dispergiermittel, 0,8 Gew.-% Weißöl und 18,2 Gew.-% Füllstoffe —, und 0,7 kg Eisenoxidrot zugegeben. Es wurd 5 Minuten gemischt. Anschließend wird Warmluft durch den Mischer gesaugt.

| Lufteintrittstemperatur: | 50—70°C |
|---|---|
| Luftaustrittstemperatur: | 30—35°C |
| Trocknungsdauer: | 30—35 Minuten. |
| Restwassergehalt des Produktes: | ⩽0,3% |
| Produkttemperatur | 25°C |

Das erhaltene Granulat besitzt eine hohe Abriebfestigkeit.

Beispiel 5

Herstellung eines Granualtes nach dem erfindungsgemäßen Verfahren:

In einem offenen Mischer der in Abb. 1 dargestellten Art werden 480,7 kg Quarzsand der Körnung 0,4—0,8 mm vorgelegt. Anschließend düst man 15,0 kg einer Klebelösung ein, die aus einer 40%igen wäßrigen Polyvinylpyrrolidon-Lösung besteht. Danach wird eine homogenisierte Mischung aus 8,3 kg O-Äthyl-O-(3-methyl-4-methylthio-phenyl)-isopropyl-amindophosphat, bestehend aus 60 Gew.-% O-Äthyl-O-(3-methyl-4-methylthio-phenyl)isopropylamidophosphat und 40 Gew.-% Kieselsäure —, und 5,0 kg Ligninsulfonat (Natriumsalz) zugegeben. Nach ungefähr 10 Minuten ist der Trägerstoff gleichmäßig umhüllt und man beginnt den Trocknungsprozeß.

| Lufteintrittstemperatur: | 50—70°C |
|---|---|
| Luftaustrittstemperatur: | 30—35°C |
| Trocknungsdauer: | 20—25 Minuten |
| Restwassergehalt des Produktes: | ⩽0,5% |
| Produkttemperatur: | 25°C |

Das erhaltene Granulat besitzt eine hohe Abriebfestigkeit.

### Beispiel 6

Herstellung eines Granulates nach dem erfindungsgemäßen Verfahren:

In einem offenen Mischer der in Abb. 1 dargestellten Art werden 372,0 kg Calcit der Körnung 0,5—1,0 mm vorgelegt und unter Mischen mit 30,0 kg einer Klebelösung (= 33%ige wäßrige Stärkelösung) und 118,0 kg 2-Isopropoxy-phenyl-N-methylcarbamat in Form eines 70%igen benetzbaren Pulvers (WP) versetzt. Die Zugabe dieser Komponenten wird nach 5 bis 10 Minuten abgeschlossen. Danach läßt man 5 Minuten nachmischen, um die Hüllschicht zu verfestigen. Anschließend wird warme Luft durch den Mischer gesaugt.

| | |
|---|---|
| Lufteintrittstemperatur: | 50°C |
| Luftaustrittstemperatur: | 30°C |
| Trocknungsdauer: | etwa 45 Minuten |
| Restwassergehalt des Produktes: | ⩽1,0% |
| Produkttemperatur: | etwa 20°C |

Das erhaltene Granulat besitzt eine hohe Abriebfestigkeit.

### Beispiel 7

Herstellung eines Granulates nach dem erfindungsgemäßen Verfahren durch Imprägnierung eines porösen Trägerstoffes und anschließendes Coaten:

In einem offenen Mischer der in Abb. 1 dargestellten Art werden 173,0 kg Bimsgrieß der Körnung 0,5—1,0 mm vorgelegt und unter Mischen mit dem homogenisierten Gemisch aus 4,0 kg Emulgator-Lösung (= 80%ige Lösung des Emulgators in Butanol) und 21,0 kg 2-(Äthylthiomethyl-phenyl)-N-Methylcarbamat versetzt. Man läßt zur gleichmäßigen Verteilung 10 Minuten nachmischen. Anschließend werden 10,0 kg einer Coating-Lösung (= 20%ige Lösung von Polyvinylalkohol in Wasser) eingesprüht. Danach wird sofort der Trocknungsprozeß eingeleitet.

| | |
|---|---|
| Lufteintrittstemperatur: | 60°C |
| Luftaustrittstemperatur: | 30°C |
| Trocknungsdauer: | 10—15 Minuten |
| Restwassergehalt des Produktes: | ⩽0,3% |

Das erhaltene Granulat besitzt eine hohe Abriebfestigkeit.

### Beispiel 8

Herstellung eines Granulates nach dem erfindungsgemäßen Verfahren durch Imprägnierung eines porösen Trägerstoffs und anschließendes Coaten:

In einem offenen Mischer der in Abb. 1 dargestellten Art werden 167,4 kg Bimsgrieß der Körnung 0,5—1,0 mm vorgelegt und unter Mischen mit dem homogenisierten Gemisch aus 10,8 kg O,O-Diäthyl-S-(2-äthylmercaptoäthyl)-dithiophosphorsäureester und 8,0 kg Emulgator-Lösung (= 80%ige Lösung des Emulgators in n-Butanol) versetzt. Anschließend sprüht man ein Gemisch aus 15,0 kg Harnstoff-Lösung (80%ige Lösung von Harnstoff in Wasser) und 16,5 kg Formaldehyd-Lösung (40%ige Lösung von Formaldehyd in Wasser) auf. Die ablaufende Kondensation zum Harnstoffharz wird durch Zugabe von 0,2 kg Zitronensäure beschleunigt. Gleichzeitig erfolgt die Trocknung mit einer Lufteintrittstemperatur von 60—70°C.

| | |
|---|---|
| Luftaustrittstemperatur: | 30—35°C |
| Trocknungsdauer: | ca. 60 Minuten |
| Restwassergehalt: | 1,0—2,0% |

Das erhaltene Granulat besitzt eine hohe Abriebfestigkeit.

## Patentansprüche

1. Verfahren zur Herstellung staubfreier Pflanzenschutzmittel-Granulate, dadurch gekennzeichnet, daß man

a) in einem offenen, in seiner Drehrichtung gegebenenfalls umsteuerbaren Mischer Trägermaterial (Kernmaterial) vorlegt,

b) dann unter Mischen mit Bindemittel und Hüllmaterial, welches bis 100% Pflanzenschutzmittel enthalten kann, sowie gegebenenfalls mit Zusatzstoffen versetzt und

c) anschließend unter Gaszufuhr in dem offenen, in seiner Drehrichtung gegebenenfalls umsteuerbaren Mischer trocknet.

2. Verfahren zur Herstellung von staubfreien Pflanzenschutzmittel-Granulaten nach Anspruch 1, dadurch gekennzeichnet, daß dieses mit Hilfe einer Vorrichtung, bestehend aus einem ein- oder beidseitig offenen, in seiner Drehrichtung gegebenenfalls umsteuerbaren Mischer mit Zufuhreinrichtungen für Trägergranulat, feinteilige Feststoffe und Gas, durchgeführt wird.

## Revendications

1. Procédé de fabrication de granulats d'agents de protection des plantes exempts de poussière, caractérisé en ce que

a) on introduit d'advance du matériau de support (matériau de noyau) dans un mélangeur ouvert qui est éventuellement inversable dans son sens de rotation,

b) tout en mélangeant, on a joute ensuite un liant et un matériau d'enrobage, lequel peut contenir jusqu'à 100% d'agent de protection des plantes, de même éventuellement que des additifs et

c) on sèche ensuite par admission d'un gaz dans le mélangeur ouvert qui est éventuellement inversable dans son sens de rotation.

2. Procédé de fabrication de granulats d'agents de protection des plantes exempts de poussière selon la revendication 1, caractérisé en ce que celui-ci est exécuté à l'aide d'un appareillage consistant en un mélangeur ouvert sur un ou les deux côtés et éventuellement inversable dans son sens de rotation, qui est muni de dispositifs d'alimentation pour le granulat de support, les matières solides finement divisées et le gaz.

## Claims

1. Process for the production of dust-free plant protection agent granules, characterised in that

a) a carrier (core material) is initially introduced into an open mixer optionally with a reversible direction of rotation

b) a binder and a coating material, which can contain up to 100% of a plant protection agent, and if appropriate additives are then added, whilst mixing, and

c) the mixture is then dried in the open mixer optionally with a reversible direction of rotation, a gas being passed in.

2. Process for the production of dust-free plant protection agent granules according to claim 1, characterised in that this process is carried out with the aid of a device consisting of a mixer optionally with a reversible direction of rotation, which is open on one or both sides and has feeding devices for granule carriers, fine-particled solids, and gas.